(19) Europäisches Patentamt
European Patent Office
Office européen des brevets

(11) Veröffentlichungsnummer: **0 075 168**
**B1**

(12) # EUROPÄISCHE PATENTSCHRIFT

(45) Veröffentlichungstag der Patentschrift: **26.02.86**

(51) Int. Cl.⁴: **C 07 F 9/11**, C 07 F 9/142, C 07 F 9/40, C 07 C 93/18, D 06 M 13/46

(21) Anmeldenummer: **82108185.8**

(22) Anmeldetag: **06.09.82**

(54) **Ammoniumverbindungen.**

(30) Priorität: **17.09.81 DE 3137043**

(43) Veröffentlichungstag der Anmeldung: **30.03.83 Patentblatt 83/13**

(45) Bekanntmachung des Hinweises auf die Patenterteilung: **26.02.86 Patentblatt 86/9**

(84) Benannte Vertragsstaaten: **CH DE FR GB LI**

(56) Entgegenhaltungen:
**EP-A-0 001 620**
**EP-A-0 021 546**
**EP-A-0 029 172**
**FR-A-2 399 433**

(73) Patentinhaber: **BAYER AG, Konzernverwaltung RP Patentabteilung, D-5090 Leverkusen 1 Bayerwerk (DE)**

(72) Erfinder: **Walz, Klaus, Dr., Domblick 4, D-5090 Leverkusen 3 (DE)**
Erfinder: **Schäfer, Karl, Kölner-Strasse 133, D-5090 Leverkusen 3 (DE)**
Erfinder: **Hoffarth, Gunther, Dr., Humboldtstrasse 25, D-5090 Leverkusen 3 (DE)**
Erfinder: **Schulze, Hans, Dr., Wolfskaul 4, D-5000 Koeln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 075 168 B1

LIBER, STOCKHOLM 1986

**Beschreibung**

Die Erfindung betrif ft neue Ammoniumverbindungen der Formel

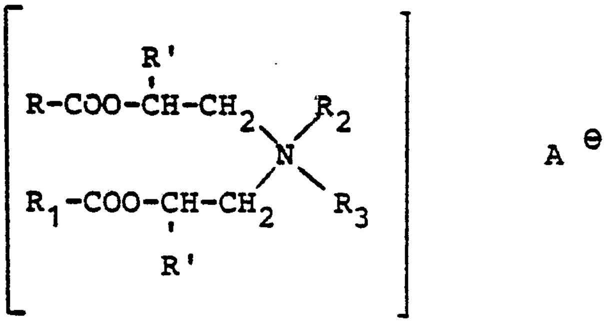

(I)

in der
R,$R_1$ $C_1$-$C_{21}$-Alkyl, $C_2$-$C_{21}$-Alkenyl,
R' Wasserstoff, $C_1$-$C_4$-Alkyl,
$R_2$ [Hydroxy]$C_1$-$C_4$-[-]alkyl, $C_1$-$C_4$-Alkyl und
$R_3$ Wasserstoff, $C_1$-$C_4$-Alkyl bezeichnen und
$A^{\ominus}$ für ein Anion der Formel

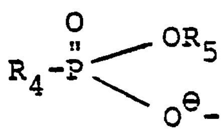

(II)

steht, in der
$R_4$ Wasserstoff, $C_1$-$C_4$-Alkyl, $C_1$-$C_4$-Alkoxy und
$R_5$ $C_1$-$C_4$-Alkyl, $C_1$-$C_4$-Hydroxyalkyl sind,

Verfahren zur Herstellung der neuen Ammoniumverbindungen sowie ihre Verwendung als Weichmachungsmittel für Fasermaterialien.

Folgende Bedeutungen der einzelnen Substituenten sind bevorzugt:

R, $R_1$ $C_{11}$-$C_{21}$-Alkyl, $C_{11}$-$C_{21}$-Alkenyl; R' Wasserstoff, Methyl; $R_3$ Methyl, Ethyl; $R_4$ Wasserstof f, Methyl, Ethyl, Methoxy, Ethoxy; $R_5$ Methyl, Ethyl.

Besonders bevorzugt sind Verbindungen der Formel I, in der $R_2$ Methyl und $R_3$ Wasserstoff, Methyl oder Ethyl bezeichnet.

Bevorzugte Anionen $A^{\ominus}$ sind:

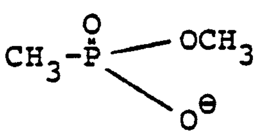 , 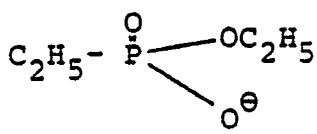 , 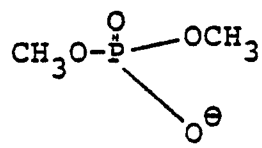

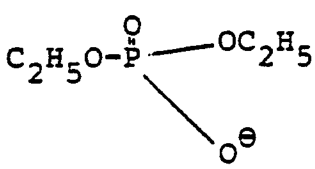 , 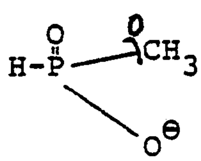 ,und 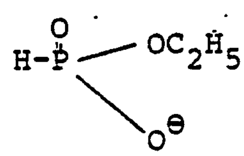 .

Die Ammoniumverbindungen der Formel I werden hergestellt, indem man Ester der Formel

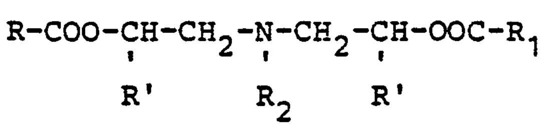

(III)

in der R, R', $R_1$ und $R_2$ die in Formel I angegebenen Bedeutungen haben, bei Temperaturen von 50 bis 200°C, vorzugsweise bei 100-150°C mit Verbindungen der Formel

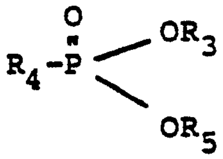 (IV)

in der $R_3$, $R_4$ und $R_5$ die zu Formel (I) und (II) angegebenen Bedeutungen besitzen, umsetzt. Die neuen Verbindungen werden hierbei als feste oder pastöse Produkte erhalten, die in Wasser leicht löslich oder dispergierbar sind.

Bevorzugte Verbindungen sind erhältlich, indem man Ester der Formel

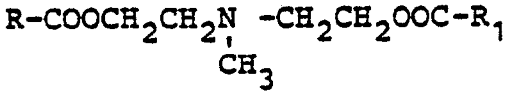 (V)

mit Trimethylphosphat, Triethylphosphat, Methanphosphonsäuredimethylester, Ethanphosphonsäurediethylester, insbesondere aber mit Dimethylphosphit oder Diethylphosphit umset zt.

Die Ester der Formeln III bzw. V können in an sich bekannter Weise hergestellt werden, beispielsweise durch Umsetzung von 2 Mol einer entsprechenden Carbonsäure oder deren Niedrigalkylester mit 1 Mol einer Verbindung der Formel

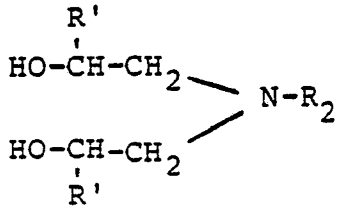 (VI)

in der R' und $R_2$ die zu Formel I angegebenen Bedeutungen besitzen, bei Temperaturen von 100 bis 180° C, wobei das gebildete Wasser oder der niedere Alkohol kontinuierlichaus dem Reaktionsgemisch entfernt werden. Für den Fall, daß R' $\neq$ $R_1$ ist, kann das Amin zunächst mit einem Mol einer Carbonsäure und anschließend mit einem Mol einer anderen Carbonsäure umgesetzt werden.

Als Carbonsäuren kommen sowohl reine Säuren wie z.B. Laurin-, Myristin-, Palmitin-, Stearin-, Arachin-, Behen-, öl- oder Linolsäure wie auch gegebenenfalls Säuregemische wie gegebenenfalls hydrierte Fettsäuregemische wie sie den natürlichen Fetten zugrundeliegen oder Fraktionen solcher Fettsäuregemische in Betracht.

Die neuen Ammoniumverbindungen eignen sich als Weichmachungsmittel für Fasermaterialien wie textile Fasermaterialien aus synthetischen Fasern, beispielsweise aus Polyester-, Poyacrylnitril- oder Polyamidfasern, sowie insbesondere aus Baumwolle- oder Regeneratcellulosefasern. Darüberhinaus sind sie als Weichmachungsmittel für Papier geeignet.

Die neuen Verbindungen werden in der für Weichmachungsmittel üblichen Weise auf die Fasermaterialien aufgebracht, beispielsweise nach dem Ausziehverfahren aus langer Flotte. Hierbei werden 0,1 g bis 10 g der neuen Verbindungen pro Liter Wasser gelöst oder dispergiert. Bei der Anwendung nach dem Foulard-Verfahren werden zweck-mäßigerweise Mengen von 5 - 25 g/l Flotte eingesetzt.

In den folgenden Beispielen bedeuten Teile Gewichtsteile.

**Beispiel 1**

241 Teile hydrierte Kokosfettsäure und 22 Teile Stearinsäure werden in 60 Teilen Toluol gelöst und mit 75 Teilen N-Methyl-N,N-diethanolamin versetzt und die Mischung auf 130-140° C erhitzt, wobei das gebildete Wasser azeotrop abdestilliert wird.

Der so erhaltenen Ester wird nach dem Abdestillieren von Toluol mit 65 Teilen Dimethylphosphit versetzt und 4-5h auf 140 °C erhitzt. Nach dem Abkühlen wird das Produkt als viskose Flüssigkeit erhalten, die sich in Wasser mit leichter Trübung löst. Die Oberflächenspannung der 0,5%igen wäßrigen Lösung bei 20° C beträgt 31,4 $mN.m^{-1}$.

**Beispiel 2**

165 Teile eines analog Beispiel 1 hergestellten Esters aus 1 Mol Stearinsäure und 1 Mol Laurinsäure mit 1 Mol N-Methyl-N,N-diethanolamin werden mit 35 Teilen Methanphosphonsäuredimethylester versetzt und 6 h bei 140° C gerührt. Es resultiert ein wasserlösliches Produkt, das bei Raumtemperatur zu einer pastösen Masse erstarrt. Die Oberflächenspannung der 0,5 %igen wäßrigen Lösung bei 20° C beträgt 35,9 $mN.m^{-1}$.

**Beispiel 3**

0,5% des Produktes aus Beispiel 1 (bezogen auf das Warengewicht) werden in Wasser 1:10 gelöst und einer wäßrigen Flotte zugesetzt, die im Verhältnis zum Warengewicht 1:20 beträgt.
Als Textilgut wird eine Baumwollfrotteeware vom Quadratmetergewicht 180 g/m² verwendet. Die Behandlungstemperatur beträgt 40° C, die Behandlungsdauer 30 min. Danach wird auf einem Foulard abgequetscht bis auf 100 % Naß-aufnahme und bei 120° C 2 - 3 min getrocknet. Es resultiert ein angenehmer, weicher Warengriff.

**Beispiel 4**

Von der gemäß Beispiel 2 hergestellten Ammoniumverbindung werden 15 g in Wasser von 40° C 1:10 gelöst. Die Lösung wird mit Wasser auf 1 l ergänzt. Baumwollfrotteegewebe vom Quadratmetergewicht 180 g/m² wird in die Flotte eingetaucht und auf einem Foulard auf 90 % Naßaufnahme abgequetscht. Dann wird 2 - 3 min bei 120° C getrocknet. Es resultiert ein Frotteegewebe mit angenehm, weichem Griff.

**Patentansprüche**

1. Ammoniumverbindungen der Formel

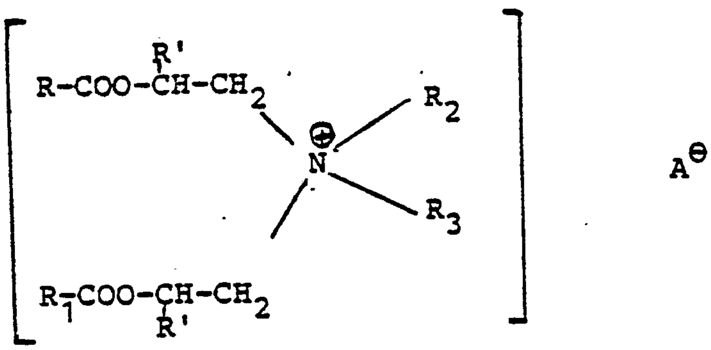

(I)

in der
R,R1 $C_1$-$C_{21}$-Alkyl, $C_2$-$C_{21}$-Alkenyl,
R' Wasserstoff, $C_1$-$C_4$-Alkyl,
$R_2$ $C_1$-$C_4$-Alkyl, [Hydroxy]$C_1$-$C_4$-[-]alkyl und
$R_3$ Wasserstoff, $C_1$-$C_4$-Alkyl bezeichnen und
$A^{\ominus}$ für ein Anion der Formel

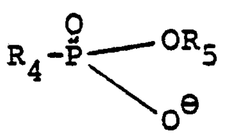

(II) steht,

in der
$R_4$ Wasserstoff, $C_1$-$C_4$-Alkyl, $C_1$-$C_4$-Alkoxy und
$R_5$ $C_1$-$C_4$-Alkyl, [Hydroxy]$C_1$-$C_4$-[-]alkyl bezeichnen.
2. Verbindungen gemäß Anspruch 1, bei denen in Formel I
R,$R_1$ $C_{11}$-$C_{21}$-Alkyl, $C_{11}$-$C_{21}$-Alkenyl,
R' Wasserstoff, Methyl,
$R_2$ $C_1$ -$C_4$-Alkyl, [Hydroxy]$C_1$-$C_4$-[-]alkyl,
$R_3$ Methyl, Ethyl,
$R_4$ Wasserstof f, Methyl, Ethyl, Methoxy, Ethoxy und
$R_5$ Methyl, Ethyl bezeichnen.
3. Verbindungen gemäß den Ansprüchen 1 und 2, bei denen
$R_2$ Methyl und
$R_3$ Wasserstoff, Methyl oder Ethyl bezeichnen.
4. Verbindungen gemäß den Ansprüchen 1 bis 3, dadurch gekennzeichnet, daß $A^{\ominus}$ für einen Rest

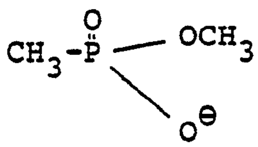 , 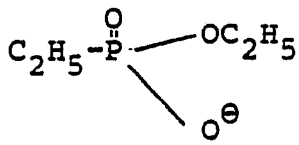 ,

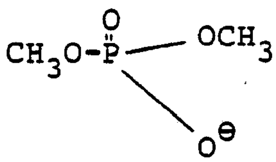 , 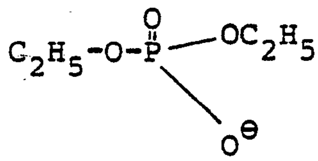 ,

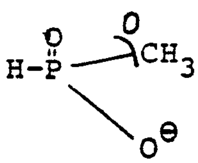 oder 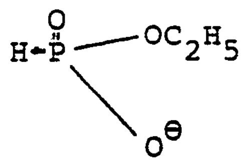

steht.

5. Ammoniumverbindungen, dadurch erhältlich, daß man Verbindungen der Formel

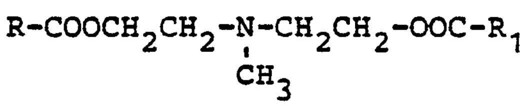 (V)

mit Trimethylphosphat, Triethylphosphat, Methanphosphonsäuredimethylester, Ethanphosphonsäurediethylester, insbesondere aber mit Dimethylphosphit oder Diethylphosphit umsetzt.

6. Verfahren zur Herstellung von Ammoniumverbindungen gemäß Anspruch 1, dadurch gekennzeichnet, daß man Ester der Formel

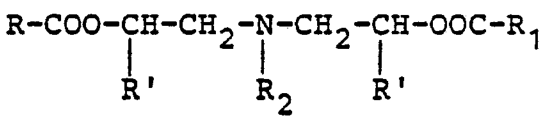 (III)

in der R, R', $R_1$ und $R_2$ die in Anspruch 1 angegebenen Bedeutungen haben, bei Temperaturen von 50 bis 200°C mit Verbindungen der Formel

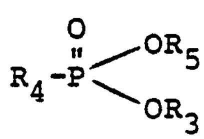 (IV)

in der $R_3$, $R_4$, $R_5$ die in Anspruch 1 angegebene Bedeutungen haben, umsetzt.

7. Verwendung der Verbindungen gemäß den Ansprüchen 1 bis 5 als Weichmachungsmittel für Fasermaterialien.

## Claims

1. Ammonium compounds of the formula

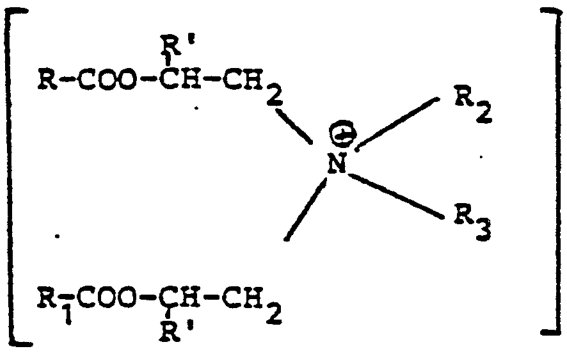 $A^{\ominus}$ (I)

in which
R and $R_1$ designate $C_1$-$C_{21}$-alkyl or $C_2$-$C_{21}$-alkenyl,
R' designates hydrogen or $C_1$-$C_4$-alkyl,
$R_2$ designates $C_1$-$C_4$-alkyl or C -$C_4$-hydroxyalkyl and
$R_3$ designates hydrogen or $C_1$-$C_4$-alkyl and
$A^{\ominus}$ represents an anion of the formula

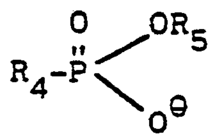 (II),

in which
$R_4$ designates hydrogen, $C_1$-$C_4$-alkyl or $C_1$-$C_4$-alkoxy and
$R_5$ designates $C_1$-$C_4$-alkyl or $C_1$-$C_4$-hydroxyalkyl

2. Compounds according to Claim 1, in which, in theformula I,
R and $R_1$ designate $C_{11}$-$C_{21}$-alkyl alkenyl,
R' designates hydrogen or methyl,
$R_2$ designates $C_1$-$C_4$,alkyl or $C_1$-$C_4$-hydroxyalkyl,
$R_3$ designates methyl or ethyl,
$R_4$ designates hydrogen methyl, ethyl, methoxy, or ethoxy and
$R_5$ designates methyl or ethyl.

3. Compounds according to Claims 1 and 2, in which
$R_2$ designates methyl and
$R_3$ designates hydrogen, methyl or ethyl.

4. Compounds according to Claims 1 to 3, characterised in that $A^{\ominus}$ represents a

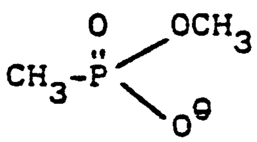 , 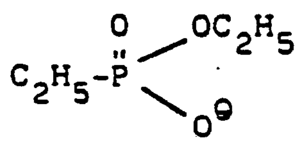 , 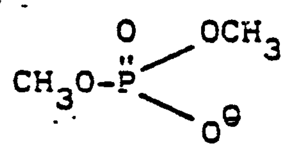 ,

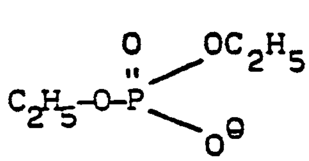 , 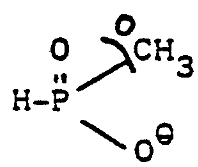 or 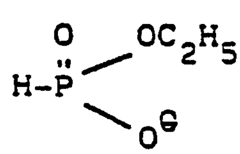 radical.

5. Ammonium compounds which can be obtained by reacting compounds of the formula

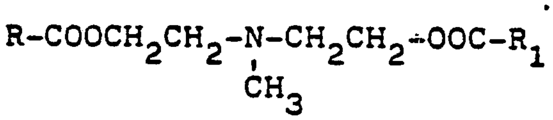 (V)

with trimethyl phosphate, triethyl phosphate, dimethyl methanephosphonate or diethyl ethanephosphonate, but, in particular, with dimethyl phosphite or diethyl phosphite.

6. Process for preparing ammonium compounds according to Claim 1, characterised in that esters of the formula

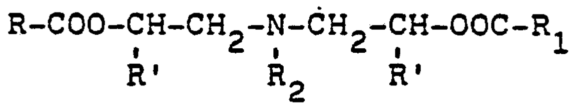

(III)

in which
R, R′, $R_1$ and $R_2$ have the meanings indicated in Claim 1
are reacted at temperatures of 50 to 200°C with compounds of the formula

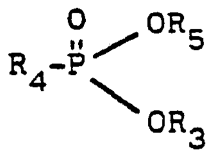

(IV)

in which
$R_3$, $R_4$ and $R_5$ have the meanings indicated in Claim 1.

7. Use of the compounds according to Claims 1 to 5, as softeners for fibre materials.

**Revendications**

1. Composés däammonium de formule

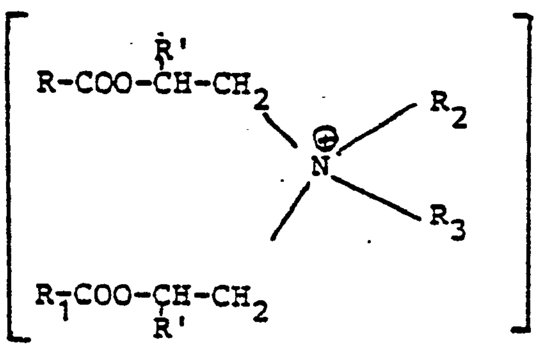

$A^{\ominus}$ (I)

dans laquelle
R, $R_1$ representent un groupe alkyle en $C_1$ à $C_{21}$, un groupe alcenyle en $C_2$ à $C_{21}$,
R′ est l'hydrogène, un groupe alkyle en $C_1$ à $C_4$,
$R_2$ est un groupe alkyle en $C_1$ à $C_4$, hydroxyalkyle en $C_1$ à $C_4$ et
$R_3$ est l'hydrogène, un groupe alkyle en $C_1$ à $C_4$, et
$A^{\ominus}$ represente un anion de formule

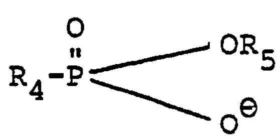

(II)

dans laquelle
$R_4$ représente l'hydrogène, un groupe alkyle en $C_1$ à $C_4$, un groupe alkoxy en $C_1$ à $C_4$, et
$R_5$ est un groupe alkyle en $C_1$ à $C_4$, hydroxyalkyle en $C_1$ à $C_4$

2. Composés suivant la revendication 1, dans la formule I desquels
R, $R_1$ représentent un groupe alkyle en $C_{11}$ à $C_{21}$, alcenyle en $C_{11}$ à $C_{21}$,
R′ est l'hydrogène, le groupe méthyle,
$R_2$ est un groupe alkyle en $C_1$ à $C_4$, hydroxyalkyle en $C_1$ à $C_4$,
$R_3$ est un groupe méthyle, éthyle,
$R_4$ est l'hydrogène, un groupe méthyle, éthyle, méthoxy, éthoxy, et
$R_5$ est un groupe méthyle, éthyle.

3. Composés suivant les revendications 1 et 2, dans lesquels
$R_2$ est un groupe méthyle et
$R_3$ est l'hydrogène, un groupe méthyle ou un groupe éthyle.

4. Composés suivant les revendications 1 à 3, caractérisés en ce que $A^{\ominus}$ représente un reste

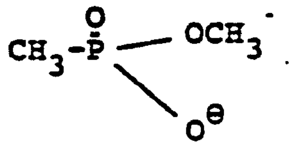 , 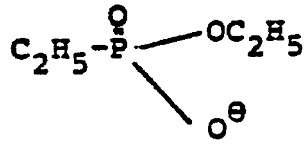 ,

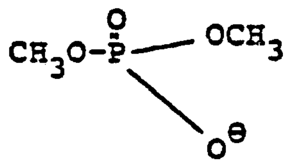 , 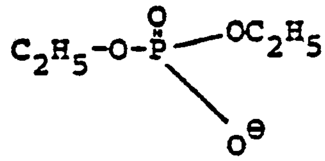 ,

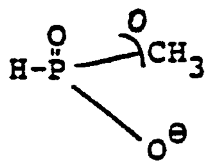 ou 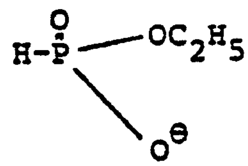

5. Composés d'ammonium, pouvant être obtenus par réaction de composés de formule

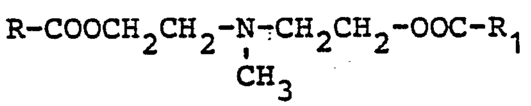 (V)

avec le phosphate de triméthyle, le phosphate de triéthyle, l'ester diméthylique de l'acide méthanephosphonique, l'ester diéthylique de l'acide éthanephosphonique, mais en particulier avec le phosphite de diméthyle ou le phosphite de diéthyle.

6. Procédé de production de composés d'ammonium suivant la revendication 1, caractérisé en ce qu'on fait réagir des esters de formule

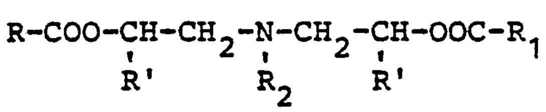 (III)

dans laquelle R, R', $R_1$ et $R_2$ ont les définitions indiquées dans la revendication 1, à des températures de 50 à 200° C avec des composés de formule

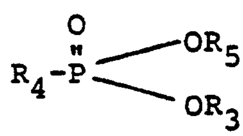 (IV)

dans laquelle $R_3$, $R_4$, $R_5$ ont les définitions données dans la revendication 1.

7. Utilisation des composés suivant les revendications 1 à 5 comme plastifiants pour matières fibreuses.